# EUROPÄISCHE PATENTSCHRIFT

(11) **EP 2 918 628 B1**
(45) Veröffentlichungstag und Bekanntmachung des Hinweises auf die Patenterteilung: **25.07.2018**
(21) Anmeldenummer: 15155589.3
(22) Anmeldetag: 18.02.2015
(51) Int. Cl.: C08J 5/02, C08J 5/04, C08J 5/18

(54) **BESCHICHTETE CFK OBERFLÄCHEN VON TURBOMOLEKULARPUMPEN**
COATED CRP SURFACES OF TURBOMOLECULAR PUMPS
SURFACES EN LAMINÉS DE FIBRES DE CARBONE REVÊTUES DE POMPES TURBOMOLÉCULAIRES

(30) Priorität: 21.02.2014 DE 102014203172
(43) Veröffentlichungstag der Anmeldung: 16.09.2015
(73) Patentinhaber: Leybold GmbH, 50968 Köln (DE)
(72) Erfinder: Froitzheim, Michael, 41539 Dormagen (DE); Odenthal, Heinz, 51061 Köln (DE); Beyer, Christian, 50765 Köln (DE)
(74) Vertreter: dompatent von Kreisler Selting Werner - Partnerschaft von Patent- und Rechtsanwälten mbB

(56) Entgegenhaltungen:
- WO-A1-2005/001294
- DE-A1-102005 040 648
- DE-A1-102007 006 915
- US-A1- 2002 182 392

## Beschreibung

Die Erfindung betrifft ein Verfahren zur Beschichtung von drehbaren Kohlenstofffaser-verstärkten Kunststoffoberflächen (CFK) oder drehbaren CFK-Gegenständen von Turbomolekularpumpen aus diesem Material.

WO 2013/081019 A1 beschreibt eine Vakuumpumpe, die geeignet ist, den Spalt zwischen einem faserverstärkten rotierenden Kunststoffzylinder und einem festen Zylinder soweit wie möglich zu reduzieren. Dies wird erreicht durch spezielle Geometrien der beiden Zylinder.

Auch in WO 2012/105116 A1 werden entsprechende Glasfaserverstärkte Kunststoffzylinder beschrieben, die mit einer korrosionsbeständigen Schicht versehen sind. Diese sind mit einer weiteren, als High-Radiation-Factor-Layer (L3) bezeichneten Schicht versehen.

EP 0 799 999 B1 beschreibt ebenfalls einen Rotor für eine Turbomolekularpumpe , der eine Vielzahl von Rotorscheiben aufweist, die zueinander parallel und voneinander beabstandet sind und an der drehbaren Welle befestigt sind, wobei die Oberflächen des Rotors und der Abstandsringe mit einem korrosionsbeständigen Schutzüberzug bedeckt sind, welcher aus einer Polymermaterialschicht mit einer gleichmäßigen Dicke ausgebildet ist. Die Polymerschicht, die bevorzugter weise aus Poly-(p-Xylylen) besteht, soll eine Dicke zwischen 10 und 22 µm aufweisen. In der Diskussion des Standes der Technik (DE 42 39 391 A1) wird ein Rotor aus einer Aluminiumlegierung angesprochen.

EP 1 414 588 B1 beschreibt ein Verfahren zum Auftragen einer Sperrbeschichtung auf ein Polymersubstrat, wobei das Verfahren folgende Schritte umfasst:
(a) Behandeln des Oberflächenteils des Polymersubstrats zum Entfernen irgendwelcher Verunreinigungen;
(b) Auftragen einer ersten Parylen N enthaltenden Schicht auf den Oberflächenteil des Polymersubstrats durch chemisches Aufdampfen;
(c) Auftragen einer zweiten Parylen C enthaltenden Schicht auf die erste Schicht von Parylen N durch chemisches Aufdampfen; und
(d) Tempern der ersten und zweiten Schichten durch Hitze in Anwesenheit eines Vakuums bei einer Tempertemperatur für eine ausreichende Zeitspanne.

DE 10 2005 040 648 A1 beschreibt ein Verfahren zur Beschichtung von Gegenständen aus Ventilmetallen aus Aluminium, Magnesium, Titan, Niob und/oder Zirkonium und deren Legierungen mit einer aus dem Metall gebildeten Oxidkeramikschicht, die eine dünne Sperrschicht als Grenzschicht zum Metall aufweist, deren Oberfläche mit Polymeren beschichtet ist, dadurch gekennzeichnet, dass man die Polymere von Poly-(p-Xylylen) in Form von Dimeren oder halogenierten Dimeren der allgemeinen Formel I 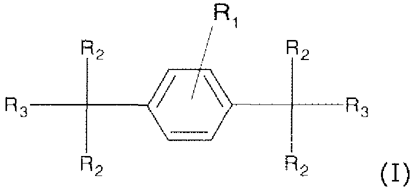 wobei
R₁ für einen oder mehrere Wasserstoff oder Halogenreste,
R₂ jeweils für Wasserstoff oder Halogen und
R₃ gemeinsam für einen entsprechenden Xylylrest zur Vervollständigung einer dimeren Struktur steht,
durch Vakuumbeschichten in das Kapillarsystem der Oxidkeramikschicht einbringt und die Dimere polymerisiert.

Die Aufgabe der vorliegenden Erfindung besteht somit in einer Verbesserung der Gleichmäßigkeit der Beschichtung und damit der Abdichtung der obengenannten Oberflächen und Gegenständen.

Die vorgenannte Aufgabe wird in einer ersten Ausführungsform gelöst durch ein **Verfahren zur Beschichtung von drehbaren Kohlenstofffaser-verstärkten (CFR)-Kunststoffoberflächen oder drehbaren Gegenständen aus Kohlenstofffaser-verstärkten Kunststoffen für schnelldrehende Bauteile für Turbomotekularpumpen, dadurch gekennzeichnet, dass man die Beschichtung in Form von Dimeren entsprechend oder halogenierten Dimeren der allgemeinen Formel I (monomerisiert)** 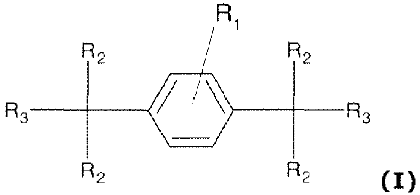 **wobei**
**R₁ für einen oder mehrere Wasserstoff- oder Halogenreste,**
R₂ **jeweils für Wasserstoff oder Halogen und**
R₃ **gemeinsam für einen entsprechenden Xylylrest zur Vervollständigung einer polymeren Struktur steht,**
**durch Vakuumbeschichten auf die Oberflächen aufbringt und die Monomere polymerisiert.**

Die allgemeine Formel (I) stellt das Monomer der polymeren oder dimeren Struktur dar.

Es wird angenommen, dass die Dimere zunächst monomerisieren und die so gebildeten Radikale dann polymerisieren.

In gleicher Weise ist auch der direkte Einsatz von Monomeren oder halogenierten Monomeren möglich. Auch die so behandelten Oberflächen zeichnen sich durch besondere Eigenschaften wie das Abweisen von Schmutz oder Staubpartikeln sowie Unbenetzbarkeit durch Medien wie Wasser, Öle oder andere Flüssigkeiten aus.

Parylene sind hydrophobe, chemisch resistente Kunststoffe mit guter Barrierewirkung gegenüber anorganischen und organischen Medien, starken Säuren, Laugen, Gasen und Wasserdampf. Als dünne und transparente Beschichtung mit hoher Spaltgängigkeit sind sie geeignet für komplex gestaltete Substrate. Es bildet sich - da Parylene keine Flüssigphase hat - keine Kantenflucht. Parylene besitzen gute dielektrische Eigenschaften mit hoher Spannungsfestigkeit und niedriger Dielektrizitätskonstante. Als biostabile und biokompatible Beschichtung besitzen Parylene ein FDA Master-File. Ab 0,6 µm Schichtdicke sind sie mikroporen- und pinholefrei. Die Beschichtung erfolgt ohne Temperaturbelastung der Substrate bei Raumtemperatur im Vakuum. Dieses Verfahren bietet einen sehr hohen Korrosionsschutz und eine gleichförmige Schichtausbildung, welche - je nach Parylene-Typ - bis zu 350 °C (Parylene HT) temperaturstabil ist, mechanisch stabil und niedrige mechanische Spannungen produziert, bedingt (Shore R80-R120; je nach Typ) abriebfest ist und bei der kein Ausgasen erfolgt. Diese Oberfläche kann durch Niederdruckplasma und/oder andere im Handel erhältliche Haftvermittler aktiviert werden (siehe WIKIPEDIA, Stichwort "Parylene" und "Plasma").

Mit Hilfe der vorliegenden Erfindung ist es möglich, die Gleichmäßigkeit von funktionalen Beschichtungen poröser Oberflächen auf den Kunststoffen bzw., den Gegenständen signifikant zu verbessern. Hierzu ist es besondere hilfreich, dass die Aufbringung der obengenannten Schichten unter Vakuum erfolgt, bei der gasförmige Monomere oder halogenierte Monomere in die Poren bzw. mikroskopisch kleine Hohlräume der Schichten eindringen und dort polymerisieren.

Die Oberflächen der genannten Gegenstände weisen hohe Anteile der Kohlefasern auf. So enthalten dies beispielsweise wenigstens 50 % der Kohlefasern auf, wenn diese wenigstens 50 Gew. %, insbesondere wenigstens 70 Gew. % der Kohlefasern enthalten. Enthalten die Gegenstände jedoch mehr als 95 Gew. % der Kohlefasern, so nimmt die Festigkeit der Gegenstände oder der Oberflächen jedoch ab, da die Menge an klebendem Polymer, beispielsweise Epoxidharz zu gering wird. Dementsprechend werden Materialien besonders bevorzugt, die bis zu 80 Gew. % an Kohlefasern enthalten. Wenn die Oberflächen vor dem erfindungsgemäßen Beschichten geschliffen werden, legt man einen Teil Kohlefasern frei, so dass die Menge an Kohlefasern hier größer sein kann als im Inneren der Gegenstände. Die Oberflächen sollten vor dem Beschichten auch üblichen Reinigungs- und Vorbehandlungsverfahren unterworfen werden, um die Haftfestigkeit der Oberflächenbeschichtung zu erhöhen. Hier bieten sich beispielsweise Plasmaverfahren an, um Öle und Fette zu entfernen. Wasserspuren werden dabei ebenfalls entfernt. Auch wird die Dichtigkeit der Oberfläche erhöht und die Abdunstungsrate der Polymere aus den Gegenständen im Vakuum und insbesondere im Hochvakuum vermindert.

Die Reinigung im Plasma dient weiterhin der Beseitigung von CH-Verbindungen und Wassermolekülen, die deutlich das Haftungsvermögen der Parylene beeinträchtigen.

Die Vorteile der erfindungsgemäßen Beschichtungen liegen einerseits in der sehr niedrigen Oberflächenenergie, andererseits in einer optimalen Resistenz und Undurchlässigkeit gegenüber beinahe allen Lösungsmitteln und Gasen, zu denen insbesondere Lösemittel, Öle (auch Silikonöle) sowie Flüssigkeiten auf Wasserbasis zählen. Auch Feststoffe können sich nur sehr schwer auf der Oberfläche des Films ablagern. Die Eigenschaft der Polymerisation bewirkt darüber hinaus eine sehr gute Haftung. Weiterhin ist die hohe chemische, thermische und elektrische Stabilität hervorzuheben, die von den üblichen Betriebsbedingungen unbeeinflusst bleibt, denen die behandelten Oberflächen bzw. Gegenstände ausgesetzt sind.

Die hohe Gleichmäßigkeit der Beschichtung bewirkt ein geringes Unwuchtrisiko bei hohen Drehzahlen bzw. großen Winkelgeschwindigkeiten. Eine hinreichende Homogenität bei gewünschter Dicke kleiner 5 µm ist nur erzielbar durch eine Abscheidung aus der Gasphase. Eine hinreichende chemische Beständigkeit, hohe Haftfestigkeit verbunden mit einem hohen Oberflächenwiderstand (Isolator) wird bei Abscheidungen aus der Gasphase erzielt, wenn anstelle der üblichen Metall-, Keramik- und Polymerschichten erfindungsgemäß aus der Gasphase abscheidbare Parylene (N, C, D, H T Beispiele der Bezeichnung nach SCS) eingesetzt werden. Die Parylene N und C weisen hier besondere Eigenschaften auf, da diese gegen die meisten Lösungsmittel beständig sind, obwohl sie den Nachteil eines Chlorgehalts aufweisen,

Diese Schicht erfüllt damit alle geforderten Eigenschaften:
- hohe Haftfestigkeit auf den Polymer-Verbundwerkstoffen
- hohe Gleichmäßigkeit der Beschichtung
- thermische Stabilität
- Korrosionsfestigkeit auch gegenüber Halogeniden einschließlich in wässriger Umgebung
- Lösemittelbeständigkeit
- keine Wasseraufnahme
- sehr großen Oberflächen-Widerstand
- Schichten < 5 µm sind für den erfindungsgemäßen Einsatzzweck völlig ausreichend
- wiederholte Aufbringbarkeit
- Vakuumbeständigkeit.

Die Monomere oder halogenierten Monomere der allgemeinen Formel I, die im Sinne der vorliegenden Erfindung eingesetzt werden können, sind vorzugsweise ausgewählt aus Dimeren des para-Xylylens oder Dimeren des halogenierten para-Xylylens.

Unter der Bezeichnung "Parylene™" werden von der Firma Parylene Coating Services Inc. oder auch von der Uniglobal Kisco Inc. Xylylen-Derivate als Beschichtungsmaterial für verschiedenste Zwecke vertrieben. Parylene™ ist eine Beschichtung, die im Vakuum durch Kondensation aus der Gasphase als porenfreier und transparenter Polymerfilm auf das Substrat aufgetragen wird. Praktisch jedes Substratmaterial, beispielsweise Metall, Glas, Papier, Lack, Kunststoff, Keramik, Ferrit und Silikone ist mit Parylene™ beschichtbar. In einem Arbeitsgang können die Beschichtungsdicken von 0,1 bis 50 µm aufgebracht werden. Parylene™-Beschichtungen stellen hydrophobe, chemisch resistente Beschichtungen mit guter Barrierewirkung gegenüber anorganischen und organischen Medien, starken Säuren, Laugen, Gasen und Wasserdampf dar. Sie besitzen eine hervorragende elektrische Isolation mit hoher Spannungsfestigkeit und niedriger Dielektrizitätskonstante. Die Beschichtungen sind Mikroporen- und Pinhole-frei ab einer Schichtdicke von 0,2 µm. Dünne und transparente Beschichtungen mit hoher Spaltgängigkeit sind geeignet für komplex gestaltete Substrate auch auf Kanten. Die Beschichtung der Substrate erfolgt ohne Temperaturbelastung, insbesondere bei Raumtemperatur im Vakuum. Die Beschichtungen sind temperaturbeständig bis zu 220 °C.

Die Ausgangsstoffe liegen üblicherweise als Dimer (Di-para-Xylylen) vor und werden auf beispielsweise 600 °C erhitzt. Hierbei werden diese in das entsprechende gasförmige Monomer umgewandelt. Die Schichtdicke und die Gleichförmigkeit werden durch die Menge und die Reinheit des verwendeten Dimers kontrolliert.

Besonders bevorzugt im Sinne der vorliegenden Erfindung werden die Schichten der Poly-para-Xylylene in einer Dicke von 0,5 bis 10 µm, insbesondere 2 bis 5 µm aufgebracht.

Die Erfindung umfasst in einer weiteren Ausführungsform CFK-Oberflächen oder Gegenstände, die nach dem obengenannten Verfahren erhältlich sind. Besonders bevorzugt im Sinne der vorliegenden Erfindung handelt es sich dabei um schnelldrehende Bauteile für Turbomolekularpumpen.

Mit Hilfe der vorliegenden Erfindung werden Gegenstände erhältlich, die sich durch eine äußerst niedrige elektrische Leitfähigkeit der Oberfläche auszeichnen.

Durch die Vakuumbeschichtung ist die komplette Beschichtung der gesamten Oberfläche gewährleistet.

## Patentansprüche

1. Verfahren zur Beschichtung von drehbaren Kohlenstofffaser-verstärkten (CFR)-Kunststoffoberflächen oder drehbaren Gegenständen aus Kohlenstofffaser-verstärkten Kunststoffen für schnelldrehende Bauteile für Turbomolekularpumpen, **dadurch gekennzeichnet, dass** man die Beschichtung in Form von Dimeren oder **entsprechend** halogenierten Dimeren der allgemeinen Formel I (monomerisiert) 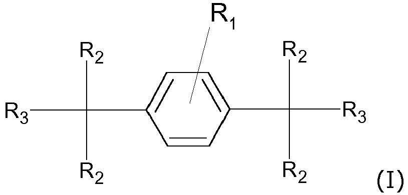 wobei
R₁ für einen oder mehrere Wasserstoff- oder Halogenreste,
R₂ jeweils für Wasserstoff oder Halogen und
R₃ gemeinsam für einen entsprechenden Xylylrest zur Vervollständigung einer polymeren Struktur steht,
durch Vakuumbeschichten auf die Oberflächen aufbringt und die Monomere polymerisiert.

2. Verfahren nach Anspruch 1, **dadurch gekennzeichnet, dass** man eine Schichtdicke der Beschichtung von 0,5 bis 10 µm, insbesondere 2 bis 5 µm aufbringt.

3. Verfahren nach Anspruch 1 oder 2 **dadurch gekennzeichnet, dass** man Dimere einsetzt, die ausgewählt sind aus dimeren Fluor-Xylylenen, Chlor-Xylylenen und/oder Wasserstoff-Xylylenen.

4. Drehbare Kohlenstofffaser-verstärkte Kunststoffoberflächen oder drehbare Gegenstände aus Kohlenstofffaser-verstärkten Kunststoffen von Turbomolekularpumpen, erhältlich nach einem Verfahren gemäß einem der Ansprüche 1 bis 3.

5. Kohlenstofffaser-verstärkte Kunststoffoberflächen oder Gegenstände aus Kohlenstofffaser-verstärkten Kunststoffen nach Anspruch 4 umfassend einen Rotor einer Turbomolekularpumpe.

6. Kohlenstofffaser-verstärkte Kunststoffoberflächen oder Gegenstände aus Kohlenstofffaser-verstärkten Kunststoffen nach Anspruch 4 oder 5, **dadurch gekennzeichnet, dass** die Schichtdicke der Polymere 0,5 bis 10 µm, insbesondere 2 bis 5 µm beträgt.

7. Kohlenstofffaser-verstärkte Kunststoffoberflächen oder Gegenstände aus Kohlenstofffaser-verstärkten Kunststoffen nach einem der Ansprüche 4 bis 6, **dadurch gekennzeichnet, dass** die CFK-Oberfläche durch eine plasmaunterstützte Reinigung vor dem Aufbringen der Polymerschicht gereinigt ist.

## Claims

1. A process for coating rotatable carbon-fiber reinforced (CFR) plastic surfaces or rotatable objects made of carbon-fiber reinforced plastics for fast rotating components for turbomolecular pumps, **characterized in that** the coating in the form of dimers or correspondingly halogenated dimers of general formula I (monomerized) 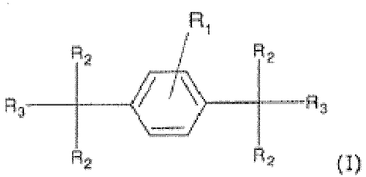 wherein
R₁ represents one or more hydrogen or halogen radicals,
each R₂ represents hydrogen or halogen, and
R₃ jointly represent a corresponding xylyl radical to complete a polymeric structure,
is applied to the surfaces by vacuum coating, and the monomers are polymerized.

2. The process according to claim 1, **characterized in that** a layer thickness of the coating of from 0.5 to 10 µm, especially from 2 to 5 µm, is applied.

3. The process according to claim 1 or 2, **characterized in that** dimers selected from dimeric fluoroxylylenes, chloroxylylenes and/or hydrogen xylylenes are employed.

4. Rotatable carbon-fiber reinforced plastic surfaces or rotatable objects made of carbon-fiber reinforced plastics of turbomolecular pumps, obtainable by a process according to any of claims 1 to 3.

5. Carbon-fiber reinforced plastic surfaces or objects made of carbon-fiber reinforced plastics according to claim 4, comprising a rotor of a turbomolecular pump.

6. Carbon-fiber reinforced plastic surfaces or objects made of carbon-fiber reinforced plastics according to claim 4 or 5, **characterized in that** the layer thickness of the polymers is from 0.5 to 10 µm, especially from 2 to 5 µm.

7. Carbon-fiber reinforced plastic surfaces or objects made of carbon-fiber reinforced plastics according to any of claims 4 to 6, **characterized in that** the CFK surface has been cleaned by plasma-assisted cleaning before the polymer layer is applied.

## Revendications

1. Procédé pour enrober des surfaces rotatives de matière plastique renforcée par des fibres de carbone (CFR) ou des objets rotatifs en matières plastiques renforcées par des fibres de carbone, pour des composants rotatifs à haute vitesse pour des pompes turbomoléculaires, **caractérisé en ce que** l'enrobage sous la forme de dimères, ou mutatis mutandis de dimères halogénés répondant à la formule générale I (monomérisée) 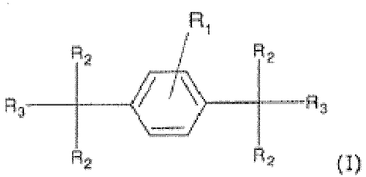 où
R₁ représente un ou plusieurs radicaux d'hydrogène ou d'halogène,
chaque R₂ représente hydrogène ou halogène, et
R₃ conjointement représentent un radical xylyle correspondant pour compléter une structure polymère,
est appliqué sur les surfaces par revêtement sous vide, et les monomères sont polymérisés.

2. Procédé selon la revendication 1, **caractérisé en ce qu'**une épaisseur de l'enrobage de 0,5 à 10 µm, notamment de 2 à 5 µm, est appliquée.

3. Procédé selon la revendication 1 ou 2, **caractérisé en ce que** des dimères choisis parmi les fluoroxylylènes, chloroxylylènes et/ou hydrogénoxylylènes dimères sont utilisés.

4. Surfaces rotatives de matière plastique renforcée par des fibres de carbone ou des objets rotatifs en matières plastiques renforcées par des fibres de carbone constituant des pompes turbomoléculaires, pouvant être obtenus par un procédé selon l'une quelconque des revendications 1 à 3.

5. Surfaces de matière plastique renforcée par des fibres de carbone ou des objets en matières plastiques renforcées par des fibres de carbone selon la revendication 4, comprenant un rotor d'une pompe turbomoléculaire.

6. Surfaces de matière plastique renforcée par des fibres de carbone ou des objets en matières plastiques renforcées par des fibres de carbone selon la revendication 4 ou 5, **caractérisés en ce que** l'épaisseur des polymères est de 0,5 à 10 µm, notamment de 2 à 5 µm.

7. Surfaces de matière plastique renforcée par des fibres de carbone ou des objets en matières plastiques renforcées par des fibres de carbone selon l'une quelconque des revendications 4 à 6, **caractérisés en ce que** la surface CFK est nettoyée par nettoyage assisté par plasma avant que la couche polymère soit appliquée.
